# EUROPEAN PATENT APPLICATION

(11) **EP 4 582 937 A1**
(43) Date of publication of application: **09.07.2025**
(21) Application number: 22957332.4
(22) Date of filing: 30.08.2022
(51) Int. Cl.: G06F 9/445

(54) **INFORMATION TERMINAL, CONTROL METHOD, CONTROL PROGRAM, INFORMATION PROCESSING DEVICE, INFORMATION PROCESSING METHOD, AND INFORMATION PROCESSING PROGRAM**

(71) Applicant: Bsize Inc., Yokohama-shi, Kanagawa, 222-0033 (JP)
(72) Inventor: YAGI Keita, Yokohama-shi, Kanagawa 222-0033 (JP)
(74) Representative: EIP
(86) International application number: PCT/JP2022/032522
(87) International publication number: WO 2024/047729

(57) **Abstract**

Provided are an information terminal, a control method, a control program, an information processing apparatus, an information processing method, and an information processing program capable of switching functions.

An information terminal according to the present invention includes two or more pieces of hardware; a receiver configured to receive software or a setting parameter; a storage module configured to store software or a setting parameter; a controller configured to control at least one or more of the two or more pieces of hardware based on the software or the setting parameter stored in the storage module; and a changer configured to change the software or the setting parameter stored in the storage module to the software or the setting parameter received by the receiver so as to be usable, and the controller makes at least one or more functions of the two or more pieces of hardware usable or unusable according to the software or the setting parameter made usable by the changer.

## Description

### Technical Field

The present invention relates to an information terminal, a control method, a control program, an information processing apparatus, an information processing method, and an information processing program capable of switching functions to be used.

### Background Art

When a child becomes a certain age, for example, an elementary school student, and the child often acts alone, a parent or guardian of the child is concerned about the action of the child, such as whether the child has arrived at a school or a cram school without an accident or the like, or whether the child has returned home.

Therefore, as a mechanism for coping with the above problem, for example, a service that enables confirmation of position information of a child using a GPS function mounted on a portable information terminal such as a smartphone is provided (see, for example, Patent Literature 1).

### Citation List

### Patent Literature

Patent Literature 1: Re-table No. 2020/202449

### Summary of Invention

### Technical Problem

At present, not only position information but also voice data can be exchanged. However, in a conventional information processing system, there is still room for improvement in convenience regarding switching such as use of only position information, use of only exchange of voice data, or use of both.

The present invention has been made in view of the above problem, and an object thereof is to provide an information terminal, a control method, a control program, an information processing apparatus, an information processing method, and an information processing program capable of switching functions.

### Solution to Problem

In order to solve the above problem, an information terminal according to the present invention includes two or more pieces of hardware; a receiver configured to receive software or a setting parameter; a storage module configured to store software or a setting parameter; a controller configured to control at least one or more of the two or more pieces of hardware based on the software or the setting parameter stored in the storage module; and a changer configured to change the software or the setting parameter stored in the storage module to the software or the setting parameter received by the receiver and so as to be usable, and the controller makes at least one or more functions of the two or more pieces of hardware usable or unusable according to the software or the setting parameter made usable by the changer.

### Advantageous Effects of Invention

According to the present invention, it is possible to provide an information terminal, a control method, a control program, an information processing apparatus, an information processing method, and an information processing program capable of switching functions.

### Brief Description of Drawings

Fig. 1 is a diagram illustrating an example of arrangement of an information processing system according to a first embodiment.
Fig. 2 is a diagram illustrating an example of a configuration of a server (information processing apparatus) according to the first embodiment.
Fig. 3 is a diagram illustrating an example of a functional configuration of the server according to the first embodiment.
Fig. 4 is a diagram illustrating an example of charge amount change timings according to the first embodiment.
Fig. 5 is a diagram illustrating an example of a configuration of a first user terminal (first terminal) according to the first embodiment.
Fig. 6 is a diagram illustrating an example of a functional configuration of the first user terminal according to the first embodiment.
Fig. 7 is a diagram illustrating an example of a configuration of a second user terminal (second terminal) according to the first embodiment.
Fig. 8 is a diagram illustrating an example of a functional configuration of the second user terminal according to the first embodiment.
Fig. 9 is a flowchart illustrating an example of processing by the information processing system according to the first embodiment.
Fig. 10 is a flowchart illustrating an example of processing by the information processing system according to the first embodiment.
Fig. 11 is a flowchart illustrating an example of processing by the information processing system according to the first embodiment.
Fig. 12 is a diagram illustrating an example of charge amount change timings according to a fourth embodiment.

### Description of Embodiments

Hereinafter, an information processing system according to each embodiment will be described with reference to the drawings. An information processing system 1 according to each embodiment is a so-called monitoring system, in which a position of a second user terminal 4 is determined from information uploaded from the second user terminal 4 carried by a watching subject (for example, a child) to a server 2 at a predetermined interval such as every 1.5 minutes, for example, and the determined position is notified from the server 2 to a first user terminal 3 carried by or used by a watching person (for example, a family member such as a parent or a grandparent). Furthermore, the information processing system 1 according to the present embodiment includes a microphone and a speaker in the first user terminal 3 and the second user terminal 4, and is configured to be able to transmit and receive messages (hereinafter, also referred to as a voice message) by a voice to and from each other. In the following description, the watching person is also referred to as a first user. The watching subject is also referred to as a second user. In the following description, software includes various software such as firmware, application software, and operation software.

### [First Embodiment]

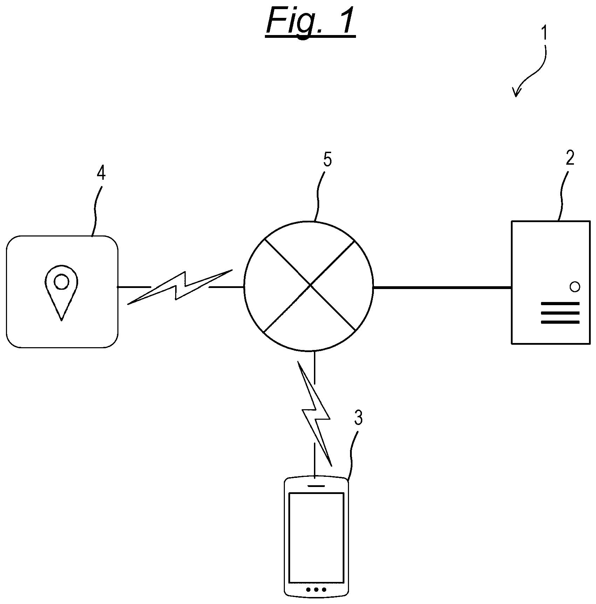

As illustrated in Fig. 1, the information processing system 1 includes a server 2 and one or more first user terminals 3 and second user terminals 4 coupled to the server 2 via a network 5. In the example illustrated in Fig. 1, the information processing system 1 includes one server 2, one first user terminal 3, and one second user terminal 4, but the number of servers 2, the number of first user terminals 3, and the number of second user terminals 4 included in the information processing system 1 are arbitrary. Note that the network 5 is also coupled to a server (not illustrated) of a Meteorological Agency or a local government, and the server 2 is configured to be able to receive emergency report by the Meteorological Agency or the local government.

### (Server 2)

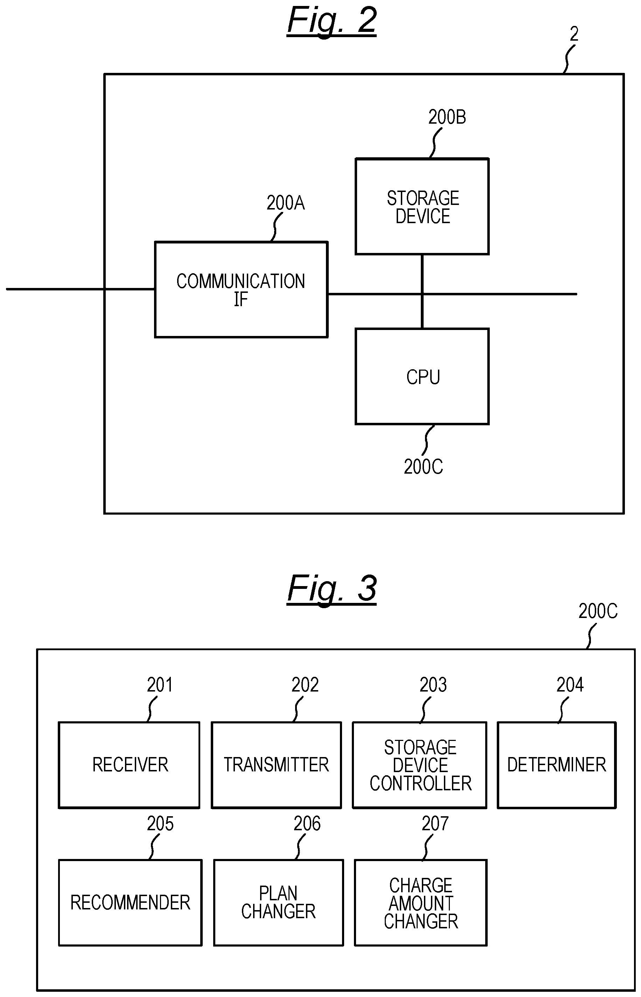

Figs. 2 and 3 are configuration diagrams of the server 2. Fig. 2 illustrates a main hardware configuration of the server 2, and the server 2 includes a communication IF 200A, a storage device 200B, a CPU 200C, and the like. Although not illustrated in Fig. 2, the server 2 may include an input device (for example, a mouse, a keyboard, a touch panel, or the like), a display device (cathode ray tube (CRT), liquid crystal display, organic EL display, or the like), and the like.

The communication IF 200A is an interface for communicating with other devices (for example, the first user terminal 3, the second user terminal 4, a server (not illustrated) of the Meteorological Agency or the local government, or the like).

The storage device 200B is, for example, a hard disk drive (HDD) or a semiconductor storage device (solid state drive (SSD)). Various data and information processing programs are stored in the storage device 200B. Note that a part or all of the various data stored in the storage device 200B may be stored in an external storage device such as a universal serial bus (USB) memory or an external HDD or a storage device of another information processing apparatus coupled via the network 5. In this case, the server 2 refers to or acquires data stored in the external storage device or the storage device of another information processing apparatus, and stores the data in the external storage device or the storage device of another information processing apparatus.

The storage device 200B stores account information of the first user terminal 3, for example, an identification number, a name, a contact address (email address or telephone number) of the first user terminal 3, an identification number of the second user terminal 4 owned by the second user (for example, one's own child), a current contract plan (for example, a GPS plan and a GPS & talk plan (plan in which a talk function is added to the GPS plan) to be described later) related to service use of the information processing system 1, a change history of the contract plan, and the like. In addition, account information of the second user terminal 4, for example, an identification number and a name of the second user terminal 4, and an identification number of the first user terminal 3 owned by the first user (for example, a family member such as a parent or a grandparent of the second user) are stored in the storage device 200B. In the storage device 200B, a log or the like including data transmitted and received by the first user terminal 3 and the second user terminal 4 is stored in association with the account.

In addition, two or more pieces of software or setting parameters for switching functions of the second user terminal 4 are stored in the storage device 200B.

In the first embodiment, pieces of software or setting parameters corresponding to two or more contract plans (for example, a GPS plan, a GPS & talk plan, and the like to be described later) existing regarding the service use of the information processing system 1 is stored in the storage device 200B, and the pieces of software or the setting parameters are downloaded to the second user terminal 4 and made usable according to the contract plan, so that the function usable in the second user terminal 4 is switched according to the plan. For example, in a case of the GPS plan, software or a setting parameter that makes a GPS sensor of the second user terminal 4 usable is downloaded to the second user terminal 4 so as to be usable, and in a case of the GPS & talk plan, in addition to the GPS sensor of the second user terminal 4, software or a setting parameter that makes the microphone and the speaker usable is downloaded to the second user terminal 4 so as to be usable.

Note that the GPS plan is a contract plan for using a GPS sensor 400H included in the second user terminal 4, and is a contract plan for enabling the user to know the position of the second user terminal 4.

In addition, the GPS & talk plan is a contract plan in which voice data can be exchanged with the first user terminal 3 by using a microphone 400F and a speaker 400G in addition to using the GPS sensor 400H included in the second user terminal 4.

The change history of the contract plan may be stored in a storage device 300B of the first user terminal 3 or a storage device 400B of the second user terminal 4.

The CPU 200C controls the server 2 according to the first embodiment, and includes a ROM, a RAM, and the like (not illustrated).

Fig. 3 is a functional block diagram of the server 2. As illustrated in Fig. 3, the server 2 includes functions such as a receiver 201, a transmitter 202, a storage device controller 203, a determiner 204, a recommender 205, a plan changer 206 (contract plan information changer), and a charge amount changer 207. Note that the functions illustrated in Fig. 3 are implemented by the CPU 200C executing an information processing program stored in the storage device 200B.

The receiver 201 receives data transmitted from the first user terminal 3, the second user terminal 4, or the like, for example, voice data, position information, a change instruction of software or a setting parameter, or the like. Furthermore, the receiver 201 receives, for example, an emergency report by the Meteorological Agency or the local government.

The transmitter 202 transmits the data received from the first user terminal 3, for example, voice data or a change instruction to the second user terminal 4. In addition, the transmitter 202 transmits the data received from the second user terminal 4, for example, position information and voice data to the first user terminal 3. In addition, the transmitter 202 transmits software or a setting parameter that makes two or more pieces of hardware included in the second user terminal 4 usable to the second user terminal 4 based on the instruction received from the first user terminal 3. In addition, the transmitter 202 transmits, to the second user terminal 4, software or a setting parameter (software or a setting parameter that makes the GPS sensor, the microphone, and the speaker of the second user terminal 4 usable) that makes two or more pieces of hardware included in the second user terminal 4 usable based on the determination result by the determiner 204.

The storage device controller 203 stores the data (for example, position information or voice data) transmitted and received by the first user terminal 3 and the second user terminal 4 in the storage device 200B in association with the identification number of the account or the user terminal that has transmitted and received the data. In addition, the storage device controller 203 stores a software or setting parameter download history (change history) of the second user terminal 4 in the storage device 200B in association with the identification number of the user terminal of the second user terminal 4.

The determiner 204 determines whether a predetermined condition is satisfied. Here, the predetermined condition is, for example, a case where an emergency report from the Meteorological Agency or the local government is received, and when an emergency report from the Meteorological Agency or the local government is received, the determiner 204 determines whether a current position of the second user terminal 4 is within a target range of the emergency report. When the current position is within the target range of the emergency report, the transmitter 202 transmits software or a setting parameter (software or a setting parameter that makes the GPS sensor, the microphone, and the speaker of the second user terminal 4 usable) corresponding to the GPS & talk plan to the second user terminal **4.** In addition to the emergency report by the Meteorological Agency or the local government, as the predetermined condition, for example, a case where a specific condition regarding time is satisfied, a case where a specific condition regarding a place is satisfied, a case where a specific condition is satisfied from both viewpoints, and the like are considered.

The recommender 205 recommends a change of software or a setting parameter for each second user terminal 4 according to the use history of the two or more pieces of hardware stored in the storage device 200B.

The plan changer 206 (contract plan information changer) changes a contract plan of a contractor of the second user terminal 4 (the first user of the first user terminal 3 corresponding to the second user terminal 4) in accordance with the change in the software or the setting parameter of the second user terminal 4.

The charge amount changer 207 changes a charge amount for the first user according to the change of the contract plan by the plan changer 206.

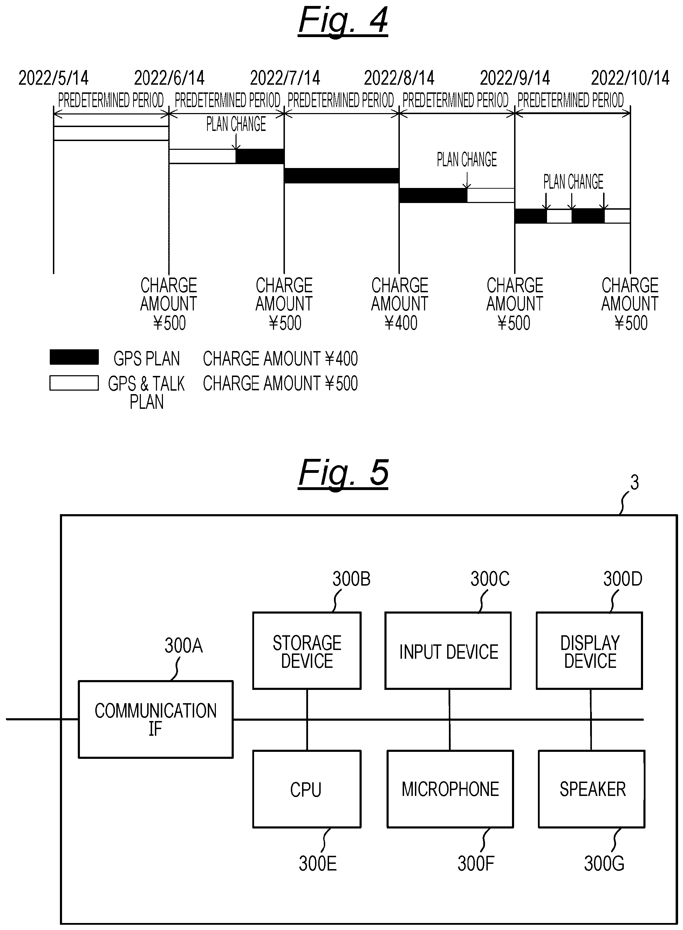

Fig. 4 is a diagram illustrating an example of charge amount change timings by the charge amount changer 207 according to the first embodiment. Note that, in the example illustrated in Fig. 4, it is assumed that a charge amount for the GPS plan (black band in Fig. 4) for a predetermined period (for example, a period that is a minimum unit of charging (one week, one month, or the like)) is 400 yen, and a charge amount for the GPS & talk plan (white band in Fig. 4) is 500 yen.

As illustrated in Fig. 4, when the contract plan is changed in the middle of the predetermined period, the charge amount changer 207 compares a charge amount (for example, a monthly charge amount) of the contract plan before change with a charge amount of the contract plan after change. When the charge amount of the contract plan after change is higher than the charge amount of the contract plan before change (for example, in a case where a plan before change is the GPS plan and a plan after change is the GPS & talk plan), a charge amount for the predetermined period (for example, for one month) including the change time point is set as the charge amount of the contract plan after change. On the other hand, when the charge amount of the contract plan before change is higher than the charge amount of the contract plan after change (for example, in a case where the plan before change is the GPS & talk plan and the plan after change is the GPS plan), the charge amount changer 207 keeps the charge amount of the contract plan before change at the predetermined period including the change time point, and sets the charge amount of the contract plan before change when or after arrival of the next predetermined period.

Note that the charge amount change timings illustrated in Fig. 4 are examples, and are not necessarily limited to the examples illustrated in Fig. 4.

### (First User Terminal 3)

The first user terminal 3 is a terminal owned by the first user, and is, for example, a smartphone or the like in which application software is installed. The first user can transmit and receive a voice message to and from the second user (for example, one's own child) by transmitting and receiving voice data to and from the second user terminal 4 registered by using the first user terminal 3. Fig. 5 illustrates a main hardware configuration of the first user terminal 3, and includes a communication IF 300A, a storage device 300B, an input device 300C, a display device 300D, a CPU 300E, a microphone 300F, a speaker 300G, and the like.

The communication IF 300A is an interface for communicating with another device (in the first embodiment, the server 2).

The storage device 300B is, for example, a hard disk drive (HDD) or a semiconductor storage device (solid state drive (SSD)). The storage device 300B stores a terminal identification number, an information processing program (application software), a message (for example, a preset message, a message inputted by the first user (the message inputted by the first user includes a voice message blown by the first user and a text message inputted by text), or a message downloaded from the server 2), and the like to be transmitted to the second user terminal 4. Note that, for example, data (for example, position information or voice data) transmitted and received between the first user terminal 3 and the second user terminal 4 may be stored in the storage device 300B. The terminal identification number is a number for identifying the first user terminal 3. By assigning the terminal identification number to the data transmitted from the first user terminal 3, the server 2 can determine from which first user terminal 3 the received data has been transmitted. Note that an internet protocol (IP) address, a media access control (MAC) address, or the like may be used as the terminal identification number, and the server 2 may assign the terminal identification number to the first user terminal 3.

The input device 300C is, for example, an input device such as a keyboard, a mouse, or a touch panel, but may be another device or equipment as long as input is possible. Furthermore, a voice input device may be used.

The display device 300D is, for example, a liquid crystal display, a plasma display, an organic EL display, or the like, but may be another device or equipment (for example, CRT: cathode ray tube) as long as display is possible.

The CPU 300E controls the first user terminal 3 according to the first embodiment, and includes a ROM and a RAM (not illustrated).

The microphone 300F is acoustic equipment that converts a sound into an electric signal. The user of the first user terminal 3 can input a voice (for example, a message to be transmitted to the second user terminal 4 or the like) by using the microphone 300F. The inputted voice is transmitted to the server 2 by the transmitter 302.

The speaker 300G is acoustic equipment that converts an electric signal into a sound. The speaker 300G reproduces, for example, voice data transmitted from the second user terminal 4 via the server 2 and stored in the storage device 300B.

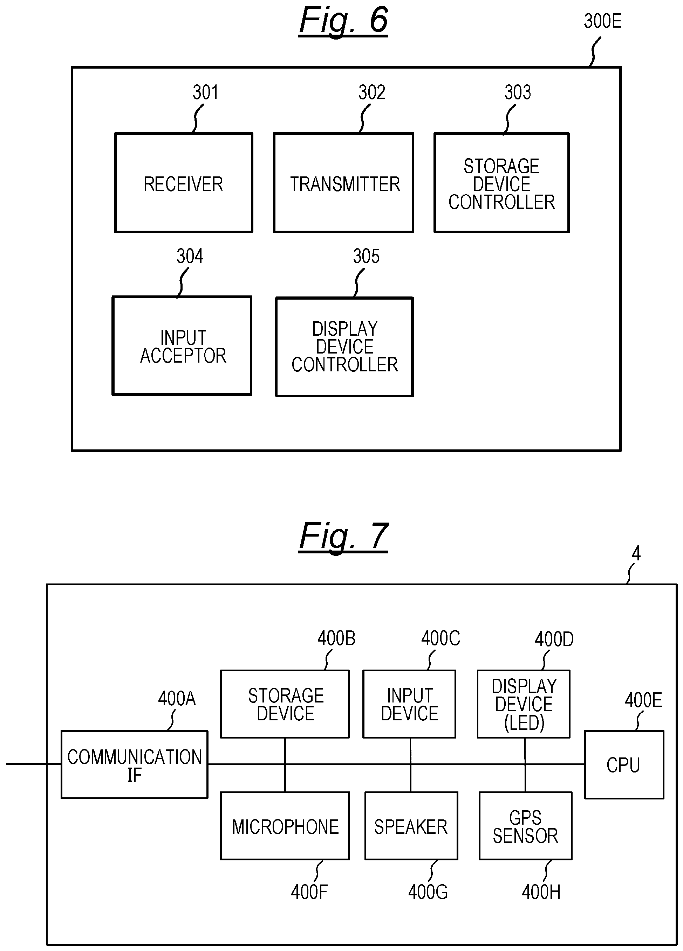

Fig. 6 illustrates a functional block diagram of the first user terminal 3, and the first user terminal 3 has functions of a receiver 301, a transmitter 302, a storage device controller 303, an input acceptor 304 (acceptor), a display device controller 305, and the like. Note that the functions illustrated in Fig. 6 are implemented by the CPU 300E executing an information processing program stored in the storage device 300B.

The receiver 301 receives, for example, data transmitted from the server 2.

For example, the transmitter 302 transmits data to the server 2 according to an input operation accepted by the input acceptor 304.

The storage device controller 303 controls the storage device 300B. For example, the storage device controller 303 may store data (for example, position information or voice data) transmitted and received by the first user terminal 3 and the second user terminal 4 in the storage device 300B in association with an identification number of an account or a user terminal that has transmitted and received the data.

The input acceptor 304 accepts an input operation from the input device 300C.

The display device controller 305 controls the display device 300D to display a screen or the like on the display device 300D.

### (Second User Terminal 4)

The second user terminal 4 is a terminal used by the second user of the first information processing system 1. The second user is capable of notifying the first user (for example, a family member of the second user) of whereabouts of the second user or exchanging a voice by transmitting and receiving the position information and the voice data by the GPS with the first user terminal 3 registered by using the second user terminal 4. Fig. 7 illustrates a main hardware configuration of the second user terminal 4, and the second user terminal 4 includes a communication IF 400A, a storage device 400B, an input device 400C, a display device 400D (LED), a CPU 400E, a microphone 400F, a speaker 400G, a GPS sensor 400H, and the like.

The communication IF 400A is an interface for communicating with another device (in the first embodiment, the server 2).

The storage device 400B is, for example, a hard disk drive (HDD) or a semiconductor storage device (solid state drive (SSD)). The storage device 400B stores a terminal identification number, an information processing program, voice data transmitted from the first user terminal 3, and the like. In addition, the storage device 400B stores software or a setting parameter downloaded from the server 2. The terminal identification number is a number for identifying the second user terminal 4. By assigning the terminal identification number to the data transmitted from the second user terminal 4, the server 2 can determine from which second user terminal 4 the received data has been transmitted. Note that an internet protocol (IP) address, a media access control (MAC) address, or the like may be used as the terminal identification number, and the server 2 may assign the terminal identification number to the second user terminal 4.

The input device 400C is, for example, an input device such as a button, a keyboard, or a touch panel, but may be another device or equipment as long as input is possible. Furthermore, a voice input device may be used. The second user can operate the input device 400C to input a voice and transmit the voice to the first user terminal 3 or reproduce voice data transmitted from the first user terminal 3.

The display device 400D is, for example, an LED. The display device 400D is controlled by the controller 406, and notifies that the voice data has been received by lighting or blinking with a set pattern or a predetermined pattern.

The CPU 400E controls the second user terminal 4 according to the first embodiment, and includes a ROM and a RAM (not illustrated).

The microphone 400F is acoustic equipment that converts a sound into an electric signal. The user of the second user terminal 4 can input a voice using the microphone 400F. The inputted voice is transmitted to the server 2 by the transmitter 402.

The speaker 400G is acoustic equipment that converts an electric signal into a sound. The speaker 400G reproduces, for example, voice data transmitted from the first user terminal 3 via the server 2 and stored in the storage device 400B.

The GPS sensor 400H receives a signal including data of the time of an atomic clock mounted on a satellite, data of a celestial calendar (orbit) of the satellite, and the like from a GPS satellite, calculates a distance from the satellite based on a difference between a transmission time and a reception time of the received signal, and specifies the current position. In addition, the GPS sensor 400H outputs the specified current position.

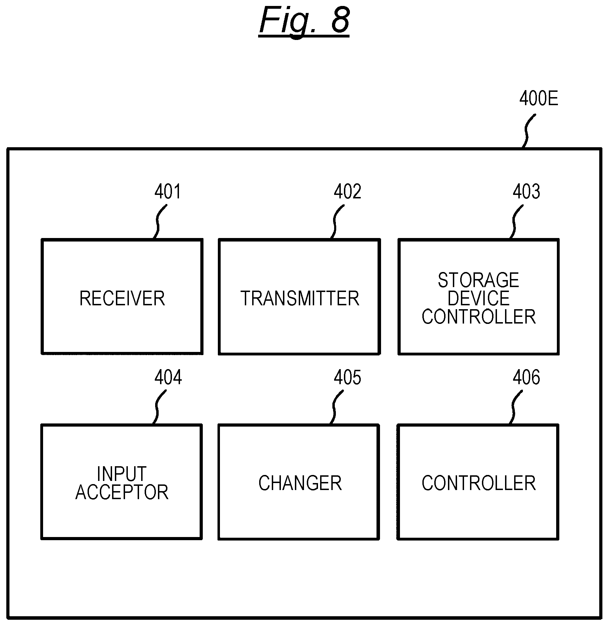

Fig. 8 illustrates a functional block diagram of the second user terminal 4, and the second user terminal 4 has functions of a receiver 401, a transmitter 402, a storage device controller 403, an input acceptor 404, a changer 405, a controller 406, and the like. Note that the functions illustrated in Fig. 8 are implemented by the CPU 400E executing an information processing program stored in the storage device 400B.

The receiver 401 receives, for example, data (for example, software or a setting parameter, voice data, and the like) transmitted from the server 2.

The transmitter 402 transmits data, for example, voice data to the server 2 according to the input operation accepted by the input acceptor 304, for example.

The storage device controller 403 controls the storage device 400B. For example, the storage device controller 403 controls the storage device 400B to write and read data. The storage device controller 403 stores, for example, data received by the receiver 401 in the storage device 400B.

The input acceptor 404 accepts an input operation from the input device 400C. The input acceptor 404 accepts, for example, an operation of reproducing voice data stored in the storage device 400B.

The changer 405 changes the software or the setting parameter stored in the storage device 200B to the software or the setting parameter received by the receiver 401 so as to be usable. Here, the changer 405 makes the software or the setting parameter received by the receiver 401 usable by restarting the second user terminal 4 (information terminal).

The controller 406 controls at least one or more of the two or more pieces of hardware (for example, a GPS sensor, a microphone, a speaker, or the like) included in the second user terminal 4 based on the software or the setting parameter stored in the storage device 400B.

The controller 406 makes at least one or more functions of the two or more pieces of hardware included in the second user terminal 4 usable or unusable according to the software or the setting parameter made usable by the changer 405. For example, in a case where a contract plan is a GPS plan, the GPS sensor of the second user terminal 4 is made usable, while the microphone and the speaker are made unusable. When a contract plan is a GPS & talk plan, all of the GPS sensor, the microphone, and the speaker of the second user terminal 4 are made usable. As described above, in the first embodiment, the software or the setting parameter corresponding to the contract plan is downloaded, and at least one or more functions of the two or more pieces of hardware included in the second user terminal 4 are made usable or unusable to provide a function corresponding to the contract plan.

Furthermore, the controller 406 notifies that the receiver 401 has received data. For example, the controller 406 notifies that the receiver 401 has received the data by lighting or blinking the display device 400D (LED) or generating a sound from the speaker.

### (Information Processing)

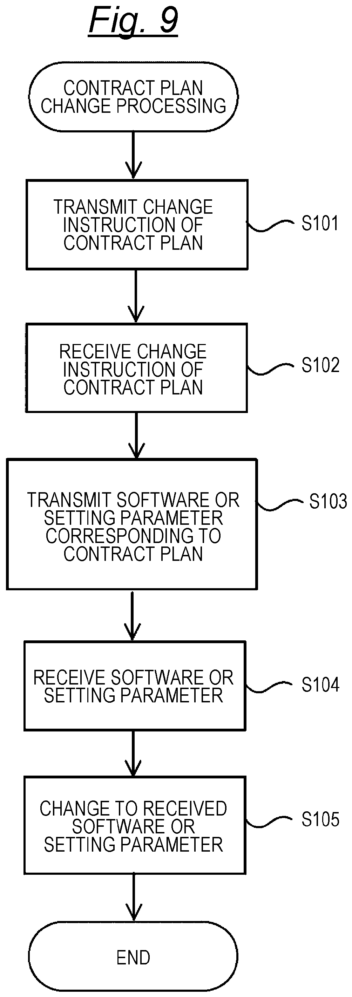

Figs. 9 to 10 are flowcharts illustrating examples of information processing of the information processing system 1. Hereinafter, information processing of the information processing system 1 will be described with reference to Figs. 9 to 10. Note that the same components as those described with reference to Figs. 1 to 8 are denoted by the same reference numerals, and redundant description will be omitted.

### (Contract Plan Change Processing)

Fig. 9 is a flowchart illustrating an example of contract plan change processing related to service use of the information processing system 1. Hereinafter, an example of the contract plan change processing regarding the service use of the information processing system 1 will be described with reference to Fig. 9.

### (Step S101)

The first user operates the first user terminal 3 to input a change of a contract plan. An input operation from the input device 300C is accepted by the input acceptor 304. The transmitter 302 of the first user terminal 3 transmits the input operation (change instruction) accepted by the input acceptor 304 to the server 2.

### (Step S102)

The receiver 201 of the server 2 receives a change instruction transmitted from the first user terminal 3.

### (Step S103)

The transmitter 202 of the server 2 reads software or a setting parameter corresponding to the contract plan instructed by the change instruction from the storage device 200B. The transmitter 202 refers to the storage device 200B, specifies an identification number of the second user terminal 4 associated with an identification number assigned to the change instruction received by the receiver 201, and transmits the software or the setting parameter read from the storage device 200B to the specified second user terminal 4.

### (Step S104)

The receiver 401 of the second user terminal 4 receives the software or the setting parameter transmitted from the server 2.

### (Step S105)

The changer 405 of the second user terminal 4 changes the software or the setting parameter stored in the storage device 200B to the software or the setting parameter received by the receiver 401 so as to be usable. Further, the controller 406 makes at least one or more functions of two or more pieces of hardware included in the second user terminal 4 usable or unusable according to the software or the setting parameter made usable by the changer 405.

### (Charge Amount Change Processing)

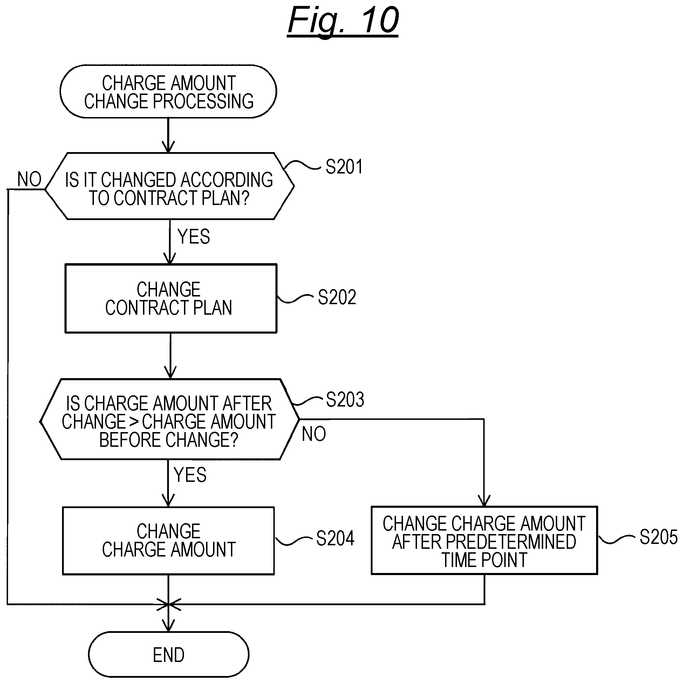

Fig. 10 is a flowchart illustrating an example of charge amount change processing regarding service use of the information processing system 1. Hereinafter, an example of the charge amount change processing regarding the service use of the information processing system 1 will be described with reference to Fig. 10.

### (Step S201)

The plan changer 206 of the server 2 determines whether the software or the setting parameter of the second user terminal 4 has been changed according to the change of the contract plan. In a case where the software or the setting parameter of the second user terminal 4 has been changed according to the change of the contract plan (YES), the server 2 executes processing of step S202. In a case where the software or the setting parameter of the second user terminal 4 has not been changed according to the change of the contract plan (NO), the server 2 ends the processing.

### (Step S202)

The plan changer 206 of the server 2 changes a contract plan. Specifically, the plan changer 206 changes a current contract plan stored in the storage device 200B. In addition, the storage device controller 203 stores a change history of the contract plan in the storage device 200B.

### (Step S203)

The charge amount changer 207 of the server 2 compares a charge amount (for example, a monthly charge amount) of the contract plan after change with a charge amount of the contract plan before change, and determines whether the charge amount of the contract plan after change is higher than the charge amount of the contract plan before change. When the charge amount of the contract plan after change is higher than the charge amount of the contract plan before change (YES), the server 2 executes processing of step S204. When the charge amount of the contract plan after change is not higher than the charge amount of the contract plan before change (NO), the server 2 executes processing of step S205.

### (Step S204)

The charge amount changer 207 of the server 2 changes the charge amount for a predetermined period (for example, for one month) including the change time point to the charge amount of the contract plan after change.

### (Step S205)

The charge amount changer 207 of the server 2 keeps the charge amount for the predetermined period including the change time point at the charge amount of the contract plan before change, and changes the charge amount to the charge amount of the contract plan before change when or after arrival of the next predetermined period.

### (Emergency Change Processing)

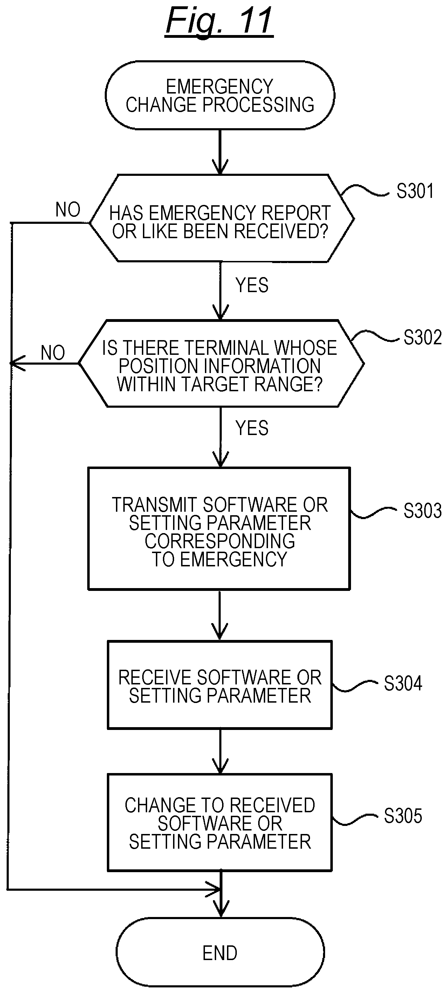

Fig. 11 is a flowchart illustrating an example of emergency change processing of the information processing system 1. Hereinafter, an example of the emergency change processing of the information processing system 1 will be described with reference to Fig. 11.

### (Step S301)

The determiner 204 of the server 2 determines, for example, whether the receiver 201 has received an emergency report or the like from the Meteorological Agency or the local government. When the emergency report or the like has been received (YES), the server 2 executes processing of step S302. When the emergency report or the like has not been received (NO), the server 2 ends the processing.

### (Step S302)

The determiner 204 of the server 2 determines whether a current position of the second user terminal 4 is within a target range of the emergency report. When the current position is within the target range of the emergency report (YES), the server 2 executes processing of step S303. When the current position is not within the target range of the emergency report (NO), the server 2 ends the processing.

### (Step S303)

The transmitter 202 of the server 2 transmits software or a setting parameter corresponding to an emergency, in this case, software or a setting parameter (software or a setting parameter that makes the GPS sensor, the microphone, and the speaker of the second user terminal 4 usable) corresponding to the GPS & talk plan to the second user terminal 4 whose current position is within the target range of the emergency report. Note that, at this time, the fact that the use of the GPS & talk plan has been temporarily released by the emergency report may be transmitted to the second user terminal 4 and the corresponding first user terminal 3 by voice data or the like.

### (Step S304)

The receiver 401 of the second user terminal 4 receives the software or the setting parameter transmitted from the server 2.

### (Step S305)

The changer 405 of the second user terminal 4 changes the software or the setting parameter stored in the storage device 200B to the software or the setting parameter received by the receiver 401 so as to be usable. Further, the controller 406 makes at least one or more functions of two or more pieces of hardware included in the second user terminal 4 usable or unusable according to the software or the setting parameter made usable by the changer 405.

Note that the determiner 204 of the server 2 may be configured to determine whether a predetermined period (for example, one week, one month, or the like) has elapsed or the emergency report has been canceled after the software or the setting parameter corresponding to the GPS & talk plan is transmitted, and in a case where it is determined that the predetermined period has elapsed or the emergency report has been canceled, the transmitter 202 may be configured to transmit, to the second user terminal 4, the software or the setting parameter corresponding to the GPS plan that is the contract plan before change (the software or the setting parameter that makes the GPS sensor of the second user terminal 4 usable) so as to be usable, and change the second user terminal 4 to correspond to the GPS plan.

Further, in the description of Fig. 11, the determiner 204 of the server 2 determines whether the current position of the second user terminal 4 is within the target range of the emergency report, but also acquires the position information from the first user terminal 3(for example, the first user terminal 3 may include a GPS sensor), the determiner 204 determines whether the current position of the first user terminal 3 or the second user terminal 4 is within the target range of the emergency report, and when the current position of the first user terminal 3 or the second user terminal 4 is within the target range of the emergency report, the transmitter 202 of the server 2 transmits software or a setting parameter corresponding to the emergency, in this case, software or a setting parameter (software or a setting parameter that makes the GPS sensor, the microphone, and the speaker of the second user terminal 4 usable) corresponding to the GPS & talk plan to the second user terminal 4 associated with the identification number of the first user terminal 3 whose current position is within the target range of the emergency report, or the second user terminal 4 whose current position is within the target range of the emergency report.

As described above, the second user terminal 4 includes two or more pieces of hardware (for example, the microphone 400F, the speaker 400G, the GPS sensor 400H, and the like), the receiver 401 that receives software or a setting parameter, the storage device 400B (storage module) that stores software or a setting parameter, the controller 406 that controls at least one or more of the two or more pieces of hardware based on the software or the setting parameter stored in the storage device 400B, and the changer 405 that changes the software or the setting parameter stored in the storage device 400B to the software or the setting parameter received by the receiver 401 so as to be usable. Then, the controller 406 makes at least one or more functions of the two or more pieces of hardware usable or unusable according to the software or the setting parameter made usable by the changer 405.

As described above, by downloading the software or the setting parameter to the second user terminal 4 so as to be usable, the second user terminal 4 can be made compatible with the contract plan, which is highly convenient.

Further, the changer 405 of the second user terminal 4 makes the software or the setting parameter usable by restarting the second user terminal 4 (information terminal).

In this way, the software or the setting parameter is made usable by automatically restarting the second user terminal 4, which is highly convenient.

### [First Modification of First Embodiment]

In the first embodiment, the software or the setting parameter is downloaded from the server 2 to the second user terminal 4, and the software or the setting parameter is switched to cope with the change of the contract plan. However, two or more pieces of software or setting parameters for switching the functions of the second user terminal 4 may be stored in the storage device 400B of the second user terminal 4, and any one or more pieces of software or setting parameters among the two or more pieces of software or setting parameters stored in the storage device 400B may be changed and made usable according to the change of the contract plan.

In this case, when the receiver 201 of the server 2 receives a change instruction transmitted from the first user terminal 3, the transmitter 202 refers to the storage device 200B, specifies an identification number of the second user terminal 4 associated with an identification number assigned to the change instruction received by the receiver 201, and transmits the change instruction received by the receiver 201 to the specified second user terminal 4.

When the receiver 401 of the second user terminal 4 receives the change instruction of the software or the setting parameter transmitted from the server 2, the changer 405 changes any one or more pieces of software or setting parameters designated by the change instruction among the two or more pieces of software or setting parameters stored in the storage device 400B based on the change instruction received by the receiver 401 so as to be usable.

The second user terminal 4 includes two or more pieces of hardware (for example, the microphone 400F, the speaker 400G, the GPS sensor 400H, and the like), the receiver 401 that receives a change instruction of the software or the setting parameter, the storage device 400B (storage module) that stores two or more pieces of software or setting parameters, the controller 406 that controls at least one or more of the two or more pieces of hardware based on the software or the setting parameter stored in the storage device 400B, and the changer 405 that changes any one or more pieces of software or setting parameters among the two or more pieces of software or the setting parameters stored in the storage device 400B based on the change instruction received by the receiver 401 so as to be usable. Then, the controller 406 makes at least one or more functions of the two or more pieces of hardware usable or unusable according to the software or the setting parameter made usable by the changer.

As described above, by switching two or more pieces of software or setting parameters stored in the storage device 400B of the second user terminal 4 so as to be usable, the second user terminal 4 can be made compatible with the contract plan, which is highly convenient.

### [Second Modification of First Embodiment]

In the first embodiment and the first modification, the controller 406 of the second user terminal 4 may be configured to restrict use of at least one or more functions (rather than making usable or unusable) of two or more pieces of hardware included in the second user terminal 4 according to the software or the setting parameter made usable by the changer 405.

The second user terminal 4 includes two or more pieces of hardware (for example, the microphone 400F, the speaker 400G, the GPS sensor 400H, and the like), the receiver 401 that receives software or a setting parameter, the storage device 400B (storage module) that stores software or a setting parameter, the controller 406 that controls at least one of the two or more pieces of hardware based on the software or the setting parameter stored in the storage device 400B, and the changer 405 that changes the software or the setting parameter stored in the storage device 400B to the software or the setting parameter received by the receiver 401 so as to be usable. Then, the controller 406 restricts the use of at least one or more functions of the two or more pieces of hardware according to the software or the setting parameter made usable by the changer 405.

As described above, the second user terminal 4 can be made compatible with the contract plan by restricting the use of at least one or more functions of the two or more pieces of hardware according to the software or the setting parameter made usable by the changer 405, which is highly convenient.

### [Third Modification of First Embodiment]

In the first embodiment and the first and second modifications, the changer 405 of the second user terminal 4 may change software or a setting parameter according to a use history of two or more pieces of hardware included in the second user terminal 4. For example, in a case where software or a setting parameter corresponding to the GPS & talk plan is set, when the GPS sensor 400H is frequently used but the microphone 400F and the speaker 400G are hardly used among the two or more pieces of hardware included in the second user terminal 4, the changer 405 changes to software or a setting parameter corresponding to a GPS plan.

Instead of (automatically) changing the software or the setting parameter, the changer 405 of the second user terminal 4 may include a recommender that recommends the first user to change the software or the setting parameter in accordance with a use history of the two or more pieces of hardware included in the second user terminal 4. In this case, when the receiver 401 receives the change instruction transmitted from the first user terminal 3 of the first user according to the recommendation, the changer 405 changes to the software or the setting parameter according to the use history of the two or more pieces of hardware.

Note that the server 2 may include an instructor that instructs the second user terminal 4 to change the software or the setting parameter according to the use history of the two or more pieces of hardware included in the second user terminal 4, and the changer 405 of the second user terminal 4 may be configured to change the software or the setting parameter when the receiver 401 receives the instruction transmitted from the server 2. The recommender may be included in the server 2.

The changer 405 of the second user terminal 4 changes the software or the setting parameter according to the use history of the two or more pieces of hardware (for example, the microphone 400F, the speaker 400G, the GPS sensor 400H, and the like).

In this way, since the software or the setting parameter is changed according to the use history, for example, in a case where the GPS sensor 400H is frequently used but the microphone 400F and the speaker 400G are hardly used among the two or more pieces of hardware included in the second user terminal 4, the changer 405 can change to the software or the setting parameter corresponding to the GPS plan, which is highly convenient.

Note that, as described above, a configuration including a recommender that recommends a change in software or a setting parameter according to a use history of two or more pieces of hardware may be adopted. In this case, the first user can confirm or determine whether to change the contract plan, which is highly convenient.

### [Second Embodiment]

In addition, a processing routine of software operating on the second user terminal 4 may be changed to cope with the change of the contract plan. In this case, for example, when the server 2 transmits a change instruction of the software processing routine in accordance with the change of the contract plan and the receiver 401 of the second user terminal 4 receives the change instruction of the processing routine, the changer 405 may change the software processing routine stored in the storage device 400B based on the change instruction received by the receiver 401, and the controller 406 may make at least one or more functions of the two or more pieces of hardware included in the second user terminal 4 usable or unusable according to the software processing routine changed by the changer 405.

### [First Modification of Second Embodiment]

Furthermore, in the second embodiment, the controller 406 of the second user terminal 4 may be configured to restrict the use of at least one or more functions (rather than making usable or unusable) of the two or more pieces of hardware included in the second user terminal 4 according to the software processing routine changed by the changer 405.

### [Third Embodiment]

In the first and second embodiments and the modifications thereof, the hardware included in the second user terminal 4 is made usable or unusable, or the use thereof is restricted to cope with the change of the contract plan. However, the server 2 may be configured to cope with the change of the contract plan by restricting transmission and reception of information (for example, position information or voice data) regarding the two or more pieces of hardware included in the second user terminal 4 according to the change of the contract plan. In this case, the server 2 may be provided with a restriction module that restricts transmission and reception of information related to hardware other than the hardware that has been made usable among the two or more pieces of hardware included in the second user terminal 4 or the hardware that has been made unusable according to the change of the contract plan (change instruction of the software or the setting parameter).

### [Fourth Embodiment]

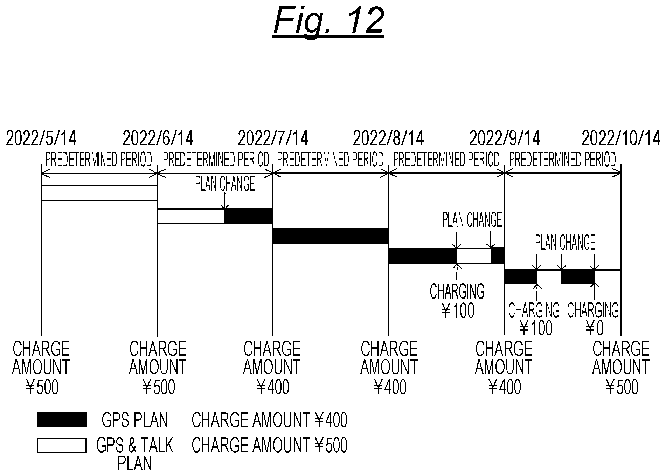

In the first embodiment, an example of the charge amount change timings (see Fig. 4) in a case where the cost (charge amount) of the contract plan is paid later has been described. In the fourth embodiment, an example of the charge amount change timings in a case where the cost (charge amount) of the contract plan is prepaid will be described with reference to Fig. 12.

Fig. 12 is a diagram illustrating an example of the charge amount change timings by the charge amount changer 207 according to the fourth embodiment.

Note that, in the example illustrated in Fig. 12, it is assumed that a charge amount for the GPS plan (black band in Fig. 12) for a predetermined period (for example, a period that is a minimum unit of charging (one week, one month, or the like)) is 400 yen, and a charge amount for the GPS & talk plan (white band in Fig. 12) is 500 yen.

As illustrated in Fig. 12, in a case of the prepayment, when the contract plan is changed in the middle of the predetermined period, the charge amount changer 207 compares a charge amount (for example, the monthly charge amount) of the contract plan before change with a charge amount of the contract plan after change. When the charge amount of the contract plan after change is higher than the charge amount of the contract plan before change (for example, in a case where a plan before the change is the GPS plan and a plan after the change is the GPS & talk plan), the charge amount changer 207 charges the insufficient amount (in the example of Fig. 12, 100 yen) from the change time point of the contract plan to the start of the next predetermined period. After that, even when the contract plan is changed a plurality of times before the start of the next predetermined period, the charge amount of 100 yen is not returned, and no new charge is made.

On the other hand, when the charge amount of the contract plan before change is higher than the charge amount of the contract plan after change (for example, in a case where a plan before the change is the GPS & talk plan and a plan after the change is the GPS plan), the charge amount changer 207 does not perform charging from the change time point of the contract plan to the start of the next predetermined period.

That is, in the fourth embodiment, when the charge amount corresponding to the GPS & talk plan is prepaid, no additional charge is made no matter how many times the contract plan is changed during the predetermined period of prepayment, and when the contract plan is changed to the GPS & talk plan during the predetermined period and the insufficient amount (in the example of Fig. 12, 100 yen) is paid, no charge is made no matter how many times the contract plan is changed thereafter during the predetermined period.

Note that the charge amount change timings illustrated in Fig. 12 are examples, and are not necessarily limited to the examples illustrated in Fig. 12.

In addition, each of the above embodiments and modifications of the embodiments are merely examples of embodying the present invention, and the technical scope of the present invention should not be interpreted in a limited manner. That is, the present invention can be implemented in various forms without departing from the gist or main features thereof. For example, although the contract plan is only the GPS plan and the GPS & talk plan in the above description, a "talk only plan" in which voice data can be exchanged with the first user terminal 3 using the microphone 400F and the speaker 400G without using the GPS sensor 400H included in the second user terminal 4 may be added as the contract plan. In addition, the second user terminal 4 may include a detector that detects a state in which hardware is unusable due to a hardware failure or a failure in software or a setting parameter included in the second user terminal 4, and the contract plan may be switched when a state in which hardware is unusable due to a hardware failure or a failure in software or a setting parameter is detected. For example, in a case where a state in which the GPS sensor 400H is unusable due to a failure of the GPS sensor 400H of the second user terminal 4 or a failure in software or a setting parameter is detected, the contract plan may be switched to the "talk only plan". In a case where a state in which the microphone 400F and the speaker 400G are unusable due to a failure of at least one of the microphone 400F and the speaker 400G of the second user terminal 4 or a failure in software or a setting parameter is detected, the contract plan may be switched to the "GPS plan". Note that the contract plan may be switched to the "GPS plan" also in a case where a state in which the microphone 400F and the speaker 400G are unusable due to a failure of at least one of the microphone 400F and the speaker 400G of the first user terminal 3 or a failure in software or a setting parameter is detected. In each of the above embodiments, transmission and reception of information on hardware other than the hardware that has been made usable among the two or more pieces of hardware included in the second user terminal 4 or hardware that has been made unusable is restricted according to the change instruction of the software or the setting parameter. However, instead of the change instruction of the software or the setting parameter, similar control may be performed according to a change instruction of firmware (software) built in the hardware.

### Industrial Applicability

The present invention can be applied to equipment including two or more pieces of hardware.

### Reference Signs List

1 Information processing system
2 Server (information processing apparatus)
3 First user terminal (first terminal)
4 Second user terminal (second terminal)
5 Network
200A Communication IF
200B Storage device
200C CPU
201 Receiver
202 Transmitter
203 Storage device controller
204 Determiner
205 Recommender
206 Plan changer
207 Charge amount changer
300A Communication IF
300B Storage device
300C Input device
300D Display device
300E CPU
300F Microphone
300G Speaker
301 Receiver
302 Transmitter
303 Storage device controller
304 Input acceptor
305 Display device controller
400A Communication IF
400B Storage device
400C Input device
400D Display device
400E CPU
400F Microphone
400G Speaker
400H GPS sensor
401 Receiver
402 Transmitter
403 Storage device controller
404 Input acceptor
405 Changer
406 Controller

## Claims

1. An information terminal comprising:
two or more pieces of hardware;
a receiver configured to receive software or a setting parameter;
a storage module configured to store software or a setting parameter;
a controller configured to control at least one or more of the two or more pieces of hardware based on the software or the setting parameter stored in the storage module; and
a changer configured to change the software or the setting parameter stored in the storage module to the software or the setting parameter received by the receiver so as to be usable, wherein
the controller
makes at least one or more functions of the two or more pieces of hardware usable or unusable according to the software or the setting parameter made usable by the changer.

2. An information terminal comprising:
two or more pieces of hardware;
a receiver configured to receive a change instruction of software or a setting parameter;
a storage module configured to store two or more pieces of software or setting parameters;
a controller configured to control at least one or more of the two or more pieces of hardware based on the software or the setting parameter stored in the storage module; and
a changer configured to change any one or more pieces of software or setting parameters among the two or more pieces of software or the setting parameters stored in the storage module based on the change instruction received by the receiver so as to be usable, wherein
the controller
makes at least one or more functions of the two or more pieces of hardware usable or unusable according to the software or the setting parameter made usable by the changer.

3. An information terminal comprising:
two or more pieces of hardware;
a receiver configured to receive software or a setting parameter;
a storage module configured to store software or a setting parameter;
a controller configured to control at least one of the two or more pieces of hardware based on the software or the setting parameter stored in the storage module; and
a changer configured to change the software or the setting parameter stored in the storage module to the software or the setting parameter received by the receiver so as to be usable, wherein
the controller
restricts use of at least one or more functions of the two or more pieces of hardware according to the software or the setting parameter made usable by the changer.

4. An information terminal comprising:
two or more pieces of hardware;
a receiver configured to receive a change instruction of software or a setting parameter transmitted from the server;
a storage module configured to store two or more pieces of software or setting parameters;
a controller configured to control at least one or more of the two or more pieces of hardware based on the software or the setting parameter stored in the storage module; and
a changer configured to change to any one of software or a setting parameter among the two or more pieces of software or the setting parameters stored in the storage module based on the change instruction received by the receiver so as to be usable, wherein
the controller
restricts use of at least one or more functions of the two or more pieces of hardware according to the software or the setting parameter made usable by the changer.

5. An information terminal comprising:
two or more pieces of hardware;
a receiver configured to receive a change instruction of a software processing routine;
a storage module configured to store software;
a controller configured to control at least one or more of the two or more pieces of hardware based on the software stored in the storage module; and
a changer configured to change a software processing routine stored in the storage module based on the change instruction received by the receiver, wherein
the controller
makes at least one or more functions of the two or more pieces of hardware usable or unusable according to the software processing routine changed by the changer.

6. An information terminal comprising:
two or more pieces of hardware;
a receiver configured to receive a change instruction of a software processing routine;
a storage module configured to store software;
a controller configured to control at least one or more of the two or more pieces of hardware based on the software stored in the storage module; and
a changer configured to change a software processing routine stored in the storage module based on the change instruction received by the receiver, wherein
the controller
restricts use of at least one or more functions of the two or more pieces of hardware according to the software processing routine changed by the changer.

7. The information terminal according to claim 1, wherein
the controller
makes at least one or more functions of the two or more pieces of hardware usable or unusable according to the software or the setting parameter made usable by the changer.

8. The information terminal according to claim 3, wherein
the controller
restricts use of at least one or more functions of the two or more pieces of hardware according to the software or the setting parameter made usable by the changer.

9. The information terminal according to claim 1, wherein
the changer
makes the software or the setting parameter usable by restarting the information terminal.

10. The information terminal according to claim 1, wherein
the changer
changes the software or the setting parameter according to a use history of the two or more pieces of hardware.

11. The information terminal according to claim 1, further comprising:
a recommender configured to recommend a change of the software or the setting parameter according to a use history of the two or more pieces of hardware.

12. The information terminal according to claim 1, further comprising:
a storage module configured to store a change history of the software or the setting parameter.

13. A control method of an information terminal including two or more pieces of hardware, the method comprising:
a step of receiving, by a receiver, software or a setting parameter;
a step of controlling, by a controller, at least one or more of the two or more pieces of hardware based on software or a setting parameter stored in a storage module that stores the software or the setting parameter; and
a step of changing, by a changer, the software or the setting parameter stored in the storage module to the software or the setting parameter received by the receiver so as to be usable, wherein
the controller
makes at least one or more functions of the two or more pieces of hardware usable or unusable according to the software or the setting parameter made usable by the changer.

14. A control method of an information terminal including two or more pieces of hardware, the method comprising:
a step of receiving, by a receiver, a change instruction of software or a setting parameter;
a step of controlling, by a controller, at least one or more of the two or more pieces of hardware based on the software or the setting parameters stored in a storage module that stores two or more pieces of software or the setting parameters; and
a step of changing, by a changer, any one or more pieces of the software or the setting parameters of the two or more pieces of software or the setting parameters stored in the storage module based on the change instruction received by the receiver so as to be usable, wherein
the controller
makes at least one or more functions of the two or more pieces of hardware usable or unusable according to the software or the setting parameter made usable by the changer.

15. A control method of an information terminal including two or more pieces of hardware, the method comprising:
a step of receiving, by a receiver, software or a setting parameter;
a step of controlling, by a controller, at least one of the two or more pieces of hardware based on software or a setting parameter stored in a storage module that stores the software or the setting parameter; and
a step of changing, by a changer, the software or the setting parameter stored in the storage module to the software or the setting parameter received by the receiver so as to be usable, wherein
the controller
restricts use of at least one or more functions of the two or more pieces of hardware according to the software or the setting parameter made usable by the changer.

16. A control method of an information terminal including two or more pieces of hardware, the method comprising:
a step of receiving, by a receiver, a change instruction of software or a setting parameter transmitted from the server;
a step of controlling, by a controller, at least one or more of the two or more pieces of hardware based on the software or the setting parameters stored in a storage module that stores two or more pieces of software or the setting parameters; and
a step of changing, by a changer, to any one of the software or the setting parameter of the two or more pieces of software or the setting parameters stored in the storage module based on the change instruction received by the receiver so as to be usable, wherein
the controller
restricts use of at least one or more functions of the two or more pieces of hardware according to the software or the setting parameter made usable by the changer.

17. A control method of an information terminal including two or more pieces of hardware, the method comprising:
a step of receiving, by a receiver, a change instruction of a software processing routine;
a step of controlling, by a controller, at least one or more of the two or more pieces of hardware based on software stored in a storage module that stores the software; and
a step of changing, by a changer, a software processing routine stored in the storage module based on the change instruction received by the receiver, wherein
the controller
makes at least one or more functions of the two or more pieces of hardware usable or unusable according to the software processing routine changed by the changer.

18. A control method of an information terminal including two or more pieces of hardware, the method comprising:
a step of receiving, by a receiver, a change instruction of a software processing routine;
a step of controlling, by a controller, at least one or more of the two or more pieces of hardware based on software stored in a storage module; and
a step of changing, by a changer, a software processing routine stored in the storage module based on the change instruction received by the receiver, wherein
the controller
restricts use of at least one or more functions of the two or more pieces of hardware according to the software processing routine changed by the changer.

19. A control program of an information terminal including two or more pieces of hardware, the control program causing
a computer to function as:
a receiver configured to receive software or a setting parameter;
a controller configured to control at least one or more of the two or more pieces of hardware based on software or a setting parameter stored in a storage module that stores the software or the setting parameter; and
a changer configured to change the software or the setting parameter stored in the storage module to the software or the setting parameter received by the receiver so as to be usable, wherein
the controller
makes at least one or more functions of the two or more pieces of hardware usable or unusable according to the software or the setting parameter made usable by the changer.

20. A control program of an information terminal including two or more pieces of hardware, the control program causing
a computer to function as:
a receiver configured to receive a change instruction of software or a setting parameter;
a controller configured to control at least one or more of the two or more pieces of hardware based on the software or the setting parameters stored in a storage module that stores two or more pieces of software or the setting parameters; and
a changer configured to change any one or more pieces of software or setting parameters among the two or more pieces of software or the setting parameters stored in the storage module based on the change instruction received by the receiver so as to be usable, wherein
the controller
makes at least one or more functions of the two or more pieces of hardware usable or unusable according to the software or the setting parameter made usable by the changer.

21. A control program of an information terminal including two or more pieces of hardware, the control program causing a computer to function as:
a receiver configured to receive software or a setting parameter;
a controller configured to control at least one of the two or more pieces of hardware based on software or a setting parameter stored in a storage module that stores the software or the setting parameter; and
a changer configured to change the software or the setting parameter stored in the storage module to the software or the setting parameter received by the receiver so as to be usable, wherein
the controller
restricts use of at least one or more functions of the two or more pieces of hardware according to the software or the setting parameter made usable by the changer.

22. A control program of an information terminal including two or more pieces of hardware, the control program causing a computer to function as:
a receiver configured to receive a change instruction of software or a setting parameter transmitted from the server;
a controller configured to control at least one or more of the two or more pieces of hardware based on the software or the setting parameters stored in a storage module that stores two or more pieces of software or the setting parameters; and
a changer configured to change to any one of software or a setting parameter among the two or more pieces of software or the setting parameters stored in the storage module based on the change instruction received by the receiver so as to be usable, wherein
the controller
restricts use of at least one or more functions of the two or more pieces of hardware according to the software or the setting parameter made usable by the changer.

23. A control program of an information terminal including two or more pieces of hardware, the control program causing a computer to function as:
a receiver configured to receive a change instruction of a software processing routine;
a controller configured to control at least one or more of the two or more pieces of hardware based on software stored in a storage module that stores the software; and
a changer configured to change a software processing routine stored in the storage module based on the change instruction received by the receiver, wherein
the controller
makes at least one or more functions of the two or more pieces of hardware usable or unusable according to the software processing routine changed by the changer.

24. A control program of an information terminal including two or more pieces of hardware, the control program causing a computer to function as:
a receiver configured to receive a change instruction of a software processing routine;
a controller configured to control at least one or more of the two or more pieces of hardware based on software stored in a storage module; and
a changer configured to change a software processing routine stored in the storage module based on the change instruction received by the receiver, wherein
the controller
restricts use of at least one or more functions of the two or more pieces of hardware according to the software processing routine changed by the changer.

25. An information processing apparatus comprising:
a receiver configured to receive an instruction from a first terminal; and
a transmitter configured to transmit software or a setting parameter to a second terminal including two or more pieces of hardware based on the instruction received by the receiver.

26. The information processing apparatus according to claim 25, further comprising:
a determiner configured to determine whether a predetermined condition is satisfied, wherein
the transmitter
transmits software or a setting parameter that makes the two or more pieces of hardware included in the second terminal usable based on a determination result by the determiner.

27. The information processing apparatus according to claim 25, further comprising:
a determiner configured to determine whether a predetermined condition is satisfied, wherein
the transmitter
instructs the second terminal to change to software or a setting parameter that makes the two or more pieces of hardware included in the second terminal usable based on a determination result by the determiner.

28. The information processing apparatus according to claim 25, further comprising:
a recommender configured to recommend a change of the software or the setting parameter according to a use history of the two or more pieces of hardware.

29. The information processing apparatus according to claim 25, further comprising:
a storage module configured to store a change history of the software or the setting parameter.

30. The information processing apparatus according to claim 25, further comprising:
a restriction module configured to restrict transmission and reception of information related to hardware other than the hardware made usable among the two or more pieces of hardware or hardware made unusable according to a change in the software or the setting parameter.

31. The information processing apparatus according to claim 25, further comprising:
a contract plan information changer configured to change contract plan information of the second terminal for a contractor of the second terminal according to a change in the software or the setting parameter.

32. An information processing method comprising:
a step of receiving, by a receiver, an instruction from a first terminal; and
a step of transmitting, by a transmitter, software or a setting parameter to a second terminal including two or more pieces of hardware based on the instruction received by the receiver.

33. An information processing program causing a computer to function as:
a receiver configured to receive an instruction from a first terminal; and
a transmitter configured to transmit software or a setting parameter to a second terminal including two or more pieces of hardware based on the instruction received by the receiver.
